# EUROPÄISCHE PATENTSCHRIFT

(11) **EP 2 558 276 B1**
(45) Veröffentlichungstag und Bekanntmachung des Hinweises auf die Patenterteilung: **20.08.2014**
(21) Anmeldenummer: 11725310.4
(22) Anmeldetag: 11.04.2011
(51) Int. Cl.: B29C 67/00

(54) **VORRICHTUNG ZUM HERSTELLEN DREIDIMENSIONALER MODELLE**
DEVICE FOR PRODUCING THREE-DIMENSIONAL MODELS
DISPOSITIF POUR CONSTRUIRE DES MODÈLES TRIDIMENSIONNELS

(30) Priorität: 14.04.2010 DE 102010014969
(43) Veröffentlichungstag der Anmeldung: 20.02.2013
(73) Patentinhaber: Voxeljet AG, 86316 Friedberg (DE)
(72) Erfinder: GÜNTHER, Daniel, 80797 München (DE); GÜNTHER, Johannes, 86163 Augsburg (DE)
(74) Vertreter: Helbig, Christian
(86) Internationale Anmeldenummer: PCT/DE2011/000385
(87) Internationale Veröffentlichungsnummer: WO 2011/127900

(56) Entgegenhaltungen:
- WO-A1-95/34468
- US-A1- 2004 012 112

## Beschreibung

Die Erfindung bezieht sich auf eine Vorrichtung zum Herstellen dreidimensionaler Modelle gemäß dem Oberbegriff des Patentanspruches 1.

Verfahren zur Herstellung dreidimensionaler Bauteile durch schichtweisen Aufbau sind schon seit längerer Zeit bekannt.

Beispielsweise wird in der europäischen Patentschrift EP 0 431 924 B1 ein Verfahren zur Herstellung dreidimensionaler Objekte aus Computerdaten beschrieben. Dabei wird ein Partikelmaterial in einer dünnen Schicht auf eine Plattform aufgetragen und dieses selektiv mittels eines Druckkopfes mit einem flüssigen Bindermaterial bedruckt. Der mit dem Binder bedruckte Partikelbereich verklebt und verfestigt sich unter dem Einfluss des Binders und gegebenenfalls eines zusätzlichen Härters. Anschließend wir die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt.

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann vom Restpartikelmaterial z.B. durch Abbürsten befreit werden.

In ähnlicher Weise arbeiten auch andere Partikelmaterial-gestützte Rapid-Prototyping-Prozesse, wie z.B. das selektive Lasersintern oder das Elektron-Beam-Sintern, bei denen jeweils ebenso ein loses Partikelmaterial schichtweise ausgebracht und mit Hilfe einer gesteuerten physikalischen Strahlungsquelle selektiv verfestigt wird.

Im Folgenden werden alle diese Verfahren unter dem Begriff "dreidimensionale Druckverfahren" oder 3D-Druckverfahren zusammengefasst.

Beim Beschichtungsvorgang, der eine Partikelmaterialschicht generiert treten, wie beispielsweise aus der US 6375874 B1 bekannt ist, Partikelmaterialströme senkrecht zur Beschichterverfahrrichtung auf. Diese müssen kontrolliert werden.

Dies gilt besonders, wenn ein Druckkopf nahe über das Partikelmaterial zu führen ist, da ein Kontakt des Druckkopfes mit dem Partikelmaterial zur Beeinträchtigung der Druckkopffunktion oder sogar zu dessen Zerstörung führen kann. In der Schrift US 6375874 B1 wird eine Vorrichtung beschrieben, die verhindert, dass sich ein solcher Partikelmaterialstrom ausbildet, indem der Raum zwischen Beschichter und dem Maschinenoberdeck mittels seitlich am Beschichter angebrachter Abstreifer abgeschlossen wird. Nachteilig bei der Konstruktion sind allerdings gegeneinander bewegte Teile und reibschlüssige Verbindungen die bei der Anwesenheit von Partikelmaterial zum Klemmen neigen. Zudem ergibt sich durch die bewegten Teile ein Verschleiß.

Bei anderen Ausprägungen wie dem Lasersintern von Partikelmaterial kommen Beschichter zum Einsatz bei denen auf den Seitenbereich kein besonderes Augenmerk gelegt wird. Beispielsweise geht aus den Zeichnungen und der Beschreibung in DE 10 2006 053 121 hervor, dass der Randbereich kastenartig ausgeführt ist und kein "Randprobleme" berücksichtigt wird. Beim Lasersintern ist eine Anhäufung von Partikelmaterial am Rand als unkritisch zu betrachten.

US 2004/0121 12 A1 beschreibt eine Vorrichtung zur Herstellung von dreidimensionalen Objekten, die einen Füllbehälter, ein Vakuumsystem, eine Baukammer und eine Überflusskammer zur Aufnahme von überschüssigem Baumaterial aufweist, wobei das Baumaterial aufgenommen wird, das von dem Füllbehälter transferiert wird, aber nicht von der Baukammer aufgenommen wird. Der erfindungsgemäße Gegenstand wird hierin weder offenbart noch nahe gelegt.

WO 95/34468 A1 beschreibt eine Vorrichtung zum schichtweisen Aufbau von Modellen, die eine Verteilereinheit, eine Sammeleinheit zum Wiedergewinnen von überschüssigem Material und ein Füllmittel zum Transferieren von Pulver zu und auffüllen der Verteilereinheit umfasst. Der erfindungsgemäße Gegenstand wird hierin weder offenbart noch nahe gelegt.

### Erfindungsaufgabe:

Es muss sichergestellt werden, dass im Verfahrbereich des Druckkopfes keine Partikelmaterialanhäufungen auftreten, mit den der Druckkopf in Kontakt kommen kann. Die Vorrichtung muss zu diesem Zweck einfach und zuverlässig arbeiten und sollte deshalb keine aktiven Saugeinrichtungen oder Reinigungssysteme aufweisen.

Diese Aufgabe wird durch eine Vorrichtung gemäß dem Patentanspruch 1 gelöst.

Weist der Beschichter wie z.B. in der EP1377389B1 beschrieben ein Nivellierelement über die gesamte Baufeldbreite auf, ist zumindest auf dem Baufeld nicht mit Partikelmaterialanhäufungen zu rechnen.
Am Beschichterstartpunkt und am Ende des Beschichtungsweges können Schächte ähnlich wie in der DE10216013B4 beschrieben angebracht werden. Diese haben ein Volumen zur Aufnahme von Partikelmaterial, das unterhalb des Baufeldes liegt. Der Beschichter ist so zu steuern, dass Übermengen, die beim Beschichten erzeugt werden, sicher in die Behälter befördert werden.

Im Arbeitsgang des Beschichters wird vor dem Beschichter eine gewisse Partikelmaterialmenge angehäuft, die direkt nivelliert wird. Das Partikelmaterial tritt aus einem Spalt durch Vibration aus, der nahezu die gesamte zu beschichtende Breite überspannt. Je nach Partikelmaterialfliesseigenschaft ergibt sich ein Partikelmaterialstrom senkrecht zur Verfahrbewegung des Beschichters. Erreicht der Partikelmaterialstrom das Ende der Nivellierklinge entsteht nach und nach eine "Partikelmaterialanhäufung", die die Gefahr des Kontaktes zwischen Druckkopf und Partikelmaterial birgt.

Eine Möglichkeit dieses Problem zu lösen, ist eine Verbreiterung der Nivellierklinge über den Bereich des Austrittsspaltes hinaus. Damit wird das Entstehen der "Anhäufung" zeitlich verzögert. Ist die Verbreiterung ausreichend, kann bis zum Ende des Baujobs kontakt- und damit schadensfrei gebaut werden.

Diese Möglichkeit ist nicht immer gegeben, da je nach Partikelmaterialfließeigenschaft die Baugröße der Maschine nicht ausreicht, um genügend Raum für eine geeignete Verbreiterung der Nivellierklinge zu schaffen.

Eine andere Möglichkeit, besteht in der Verwendung von Behältern rund um das Baufeld wie in WO199534468A1 gezeigt.
Bei Verwendung eines Wechselbehältersystems zur Aufnahme des Bauraumes einschließlich Bauplattform sind die seitlichen Behälter jedoch nur schwer realisierbar.

Z.B. könnte der Wechselbehälter unterhalb der Behälter eingeschoben werden. Dies bedeutet eine zusätzliche, im Bauprozess nicht nutzbare Vergrößerung der Bauhöhe der Vorrichtung.
Es wäre auch denkbar, die Behälter so einschwenkbar zu gestalten, dass eine Entnahme des Wechselrahmens möglich ist.
Eine weitere Ausprägung wären seitlich am Wechselbehälter angebrachte zusätzliche Behälter zur Aufnahme des Partikelmaterialüberschusses. Dies bedingt aber einen größeren Baubehälter.
In allen Fällen bedingt die Ausführung einen Entleerungsschritt nach jedem Baujob. Deshalb ist es zweckmäßig und wirtschaftlich, wenn der Beschichter die seitlich anfallenden Überschussmengen selbst in entsprechende Schächte abreinigt.

Zur näheren Erläuterung wird die Erfindung anhand bevorzugter Ausführungsbeispiele nachfolgend unter Bezugnahme auf die Zeichnung näher beschrieben.

In der Zeichnung zeigt dabei:
Figur 1 eine 3D-Druck-Vorrichtung nach dem Stand der Technik in einer räumlichen Darstellung;
Figur 2 eine bevorzugte Ausführungsform der vorliegenden Erfindung in einer seitlichen Schnittansicht;
Figur 3 und 4 verschiedene Darstellungen des Beschichtungsvorganges in einer seitlichen Schnittansicht der vorliegenden Erfindung;
Figur 5 bis 7 Detail-Schnittansicht am Beschichter einer 3D-DruckVorrichtung nach dem Stand der Technik zu verschiedenen Zeitpunkten während des Bauprozesses;
Figur 8 und 9 Detail-Schnittansicht am Beschichter einer bevorzugten Ausführungsform der vorliegenden Erfindung zu verschiedenen Zeitpunkten während des Bauprozesses;

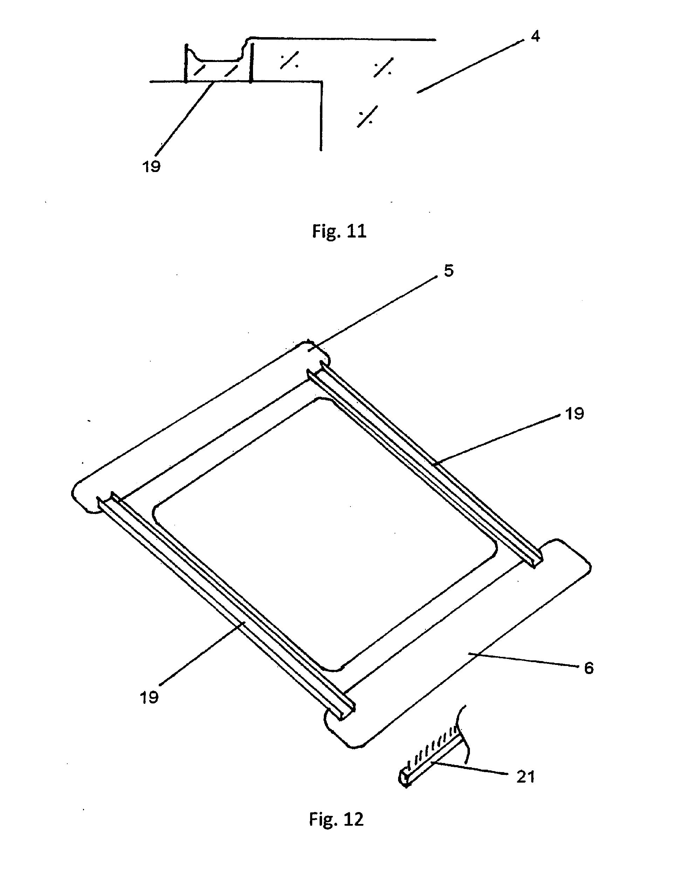

Figur 10 und 11 Detail-Schnittansicht am Beschichter einer weiteren bevorzugten Ausführungsform der vorliegenden Erfindung zu verschiedenen Zeitpunkten während des Bauprozesses;
Figur 12 eine bevorzugte Ausführungsform der vorliegenden Erfindung in einer räumlichen Darstellung;

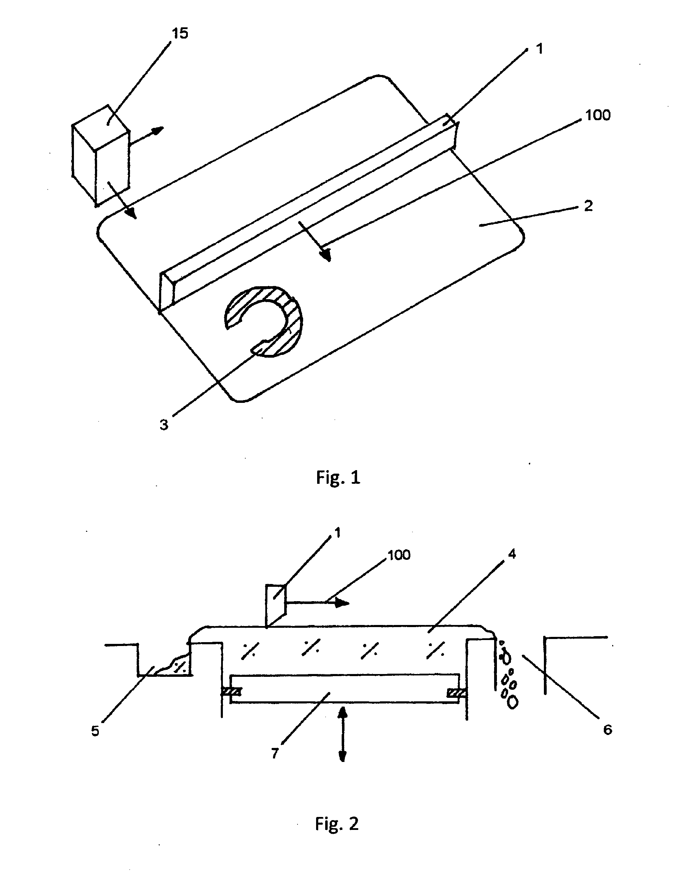

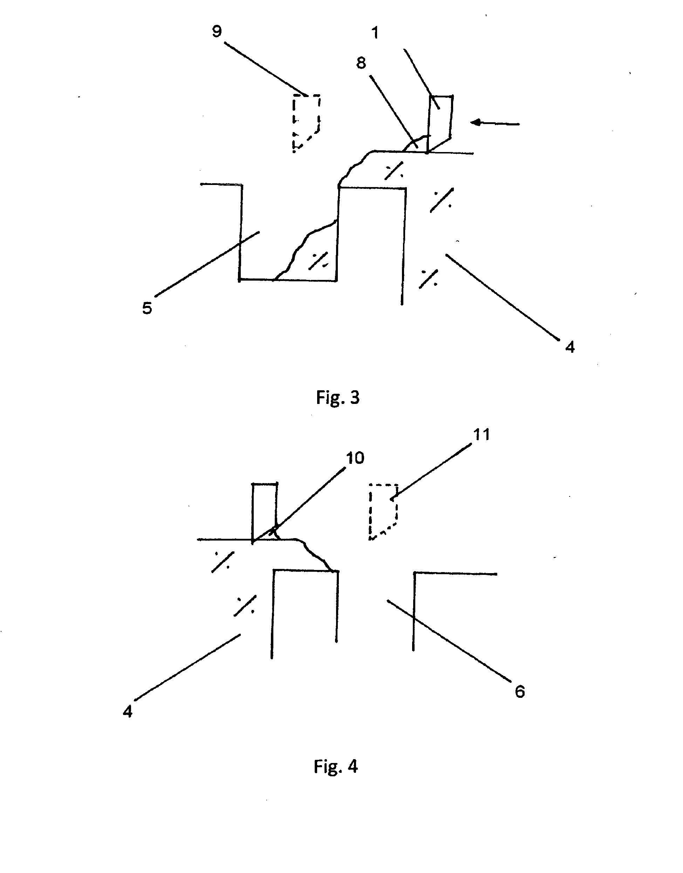

Die Aufgabe des Beschichters (1) ist es, dünne Partikelmaterialschichten auf dem Baufeld (2) zu erzeugen, die im Anschluss gemäß der Modelldaten des aktuellen Querschnittes (3) selektiv mit Hilfe des Druckkopfes (15) verfestigt werden (Fig. 1). Dabei wird der Beschichter (1) zuerst auf seine Startposition über einem vorderen Auffangschacht (5) gefahren, der sich über die gesamte Breite des Baufeldes (2) quer zur Beschichtungsrichtung (100) erstreckt. Die Bauplattform (7) wird um eine Schichtstärke, die typischerweise im Bereich von 0,05 mm - 0,5 mm liegt, abgesenkt und der Beschichter (1) setzt sich in Bewegung. Während er über das Baufeld streicht, wird der Partikelmaterialfluss eingeschaltet und die Schicht mit Partikelmaterial verfüllt. Da die Partikelmaterialmenge nicht exakt auf das zu füllende Volumen eingestellt werden kann, entsteht eine Überschussmenge in Form einer Partikelmaterialwalze (10) die in den hinteren Auffangschacht geschoben wird. Dieser befindet sich wie der vordere Auffangschacht quer zur Beschichterrichtung über die gesamte Breite des Baufeldes, jedoch an der gegenüberliegenden Seite befindet. Nachdem die Überschussmenge am Beschichter in etwa dem Volumen einer Schicht entspricht, sollte der hintere Auffangschacht mehr Partikelmaterial als zur Verfüllung des Bauvolumens nötig ist fassen. Die hintere Endlage entspricht der Position (11) (Fig. 2 und Fig. 4). Auch bei der Fahrt auf die Startposition erzeugt der Beschichter eine Partikelmatzerialwalze (8). Diese entsteht durch Ungenauigkeiten und Elastizitäten im Partikelmaterial.Deshalb muss auch die Startposition (9) über einem Auffangschacht (5) liegen. Nachdem diese Partikelmaterialwalze (8) deutlich kleiner als in umgekehrter Fahrt (10) ist, kann der vordere Auffangschacht (5) deutlich kleiner ausfallen als der Hintere (6).

Wird der Bauraum der Maschine durch einen Wechselbehälter definiert, müssen besondere Erwägungen in Betracht gezogen werden. Soll die Gesamtbauhöhe der Maschine klein bleiben, kann der Wechselbehälter nur parallel zu den Auffangschächten aus der Maschine gebracht werden.

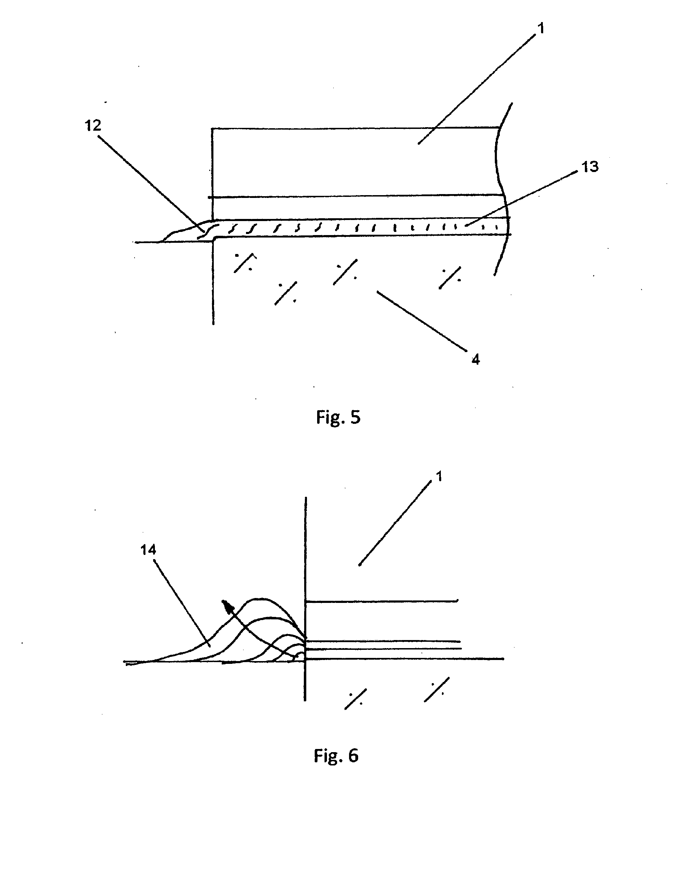

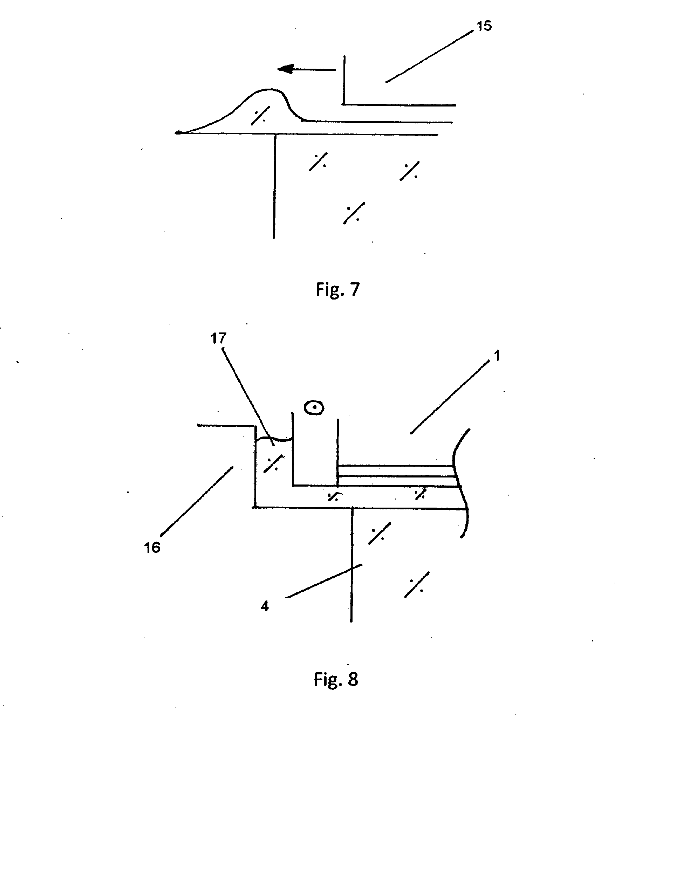

Beim Beschichtungsvorgang treten neben den gewollten Partikelmaterialflüssen auch ungewollte auf. So wird seitlich am Beschichter quer zur Beschichtungsrichtung (100) Partikelmaterial ausgeschoben (12) das über die Baufeldkante hinaus reicht. Nach mehreren Beschichtungsvorgängen wächst ein "Hügel" (14) an. Dessen Höhe wird durch die Größe der Partikelmaterialwalze und die Dynamik der Vorwärtsbewegung des Beschichters bestimmt (Fig. 5 und Fig. 6). Ist der "Hügel" (14) auf eine bestimmte Größe angewachsen, kann der Druckkopf (15) bei seiner Bewegung mit Partikelmaterial in Kontakt kommen und Schaden nehmen (Fig. 7). Dabei beträgt der Abstand des Druckkopfes von der Baufeldebene üblicherweise nur wenige mm, in der Regel sogar nur 1 - 3 mm. Es ist daher leicht verständlich, dass selbst kleinste Partikelmaterialanhäufungen im Bewegungsbereich des Druckkopfes bereits Probleme hervorrufen können.

Diese Problematik kann erfindungsgemäß durch einen Absatz (16) in der Baufeldbegrenzung (116) beseitigt werden, der parallel zur Verfahrrichtung des Beschichters seitlich des Baufeldes (2) liegt. Bei einem Beschichtungsvorgang wird jetzt das Partikelmaterial (4) nicht über das Niveau (17) ansteigen (Fig. 8). Als Absatzhöhe reichen wenige mm über der Beschichtungsebene aus. Nach der Überfahrt des Beschichters (1) bildet sich ein Schüttkegel (18) dessen Volumen bei der Rückwärtsfahrt des Beschichters weiter reduziert wird. Es stellt sich ein Gleichgewicht zwischen der erzeugten Überschussmenge und dem "Abräumen" im Randbereich ein.

Dieses Verhalten entspricht dem fluiden Charakter des bewegten Partikelmaterials. Die Flüssigkeit wird nicht über den höher gelegenen Absatz fließen. Wird durch den Beschichter eine "Welle" aufgetürmt, muss der Absatz höher gezogen werden.

Da der Absatz (16) über der durch den Beschichter nivellierten Partikelmaterialschicht liegt, reduziert sich der Abstand vom Druckkopf (15) zur Absatzkante. Dies erhöht die Wahrscheinlichkeit einer Kollision. Deshalb wird die folgende Ausführung der oben beschrieben Erfindung besonders bevorzugt.

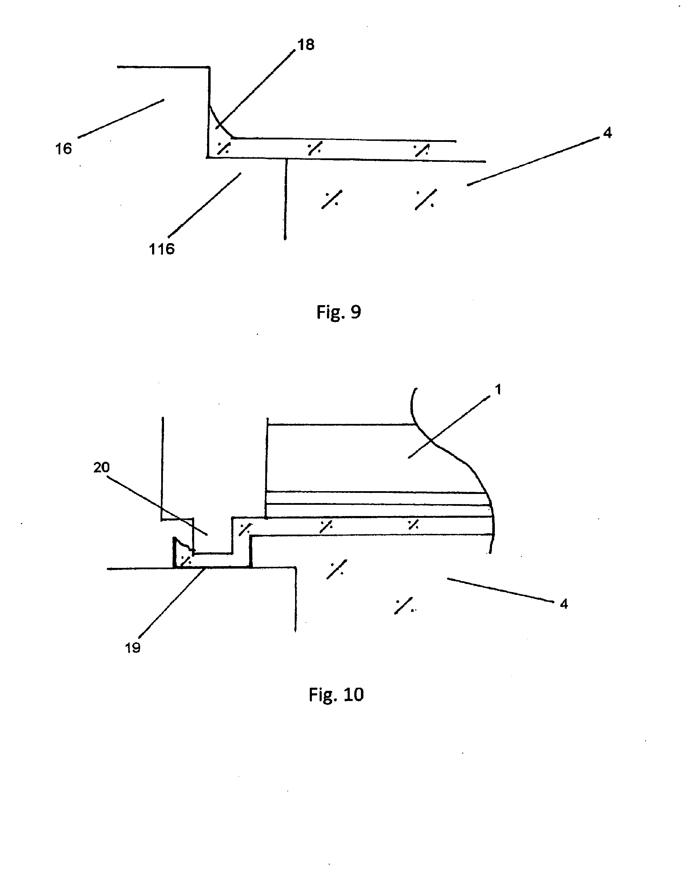

Der Absatz (16) wird als kleine rinnenartige Vertiefung (19) ausgeführt. Diese kann niedrig ausgeführt werden, da die größten Überschussmengen durch einen Schieber (20) in die großvolumigen vorderen und hinteren Auffangschächte befördert werden (Fig. 10). Ein derartiger Behälter weist vorzugsweise eine Breite von 5 - 20 mm und eine Tiefe von 2 - 10 mm auf. Überraschender Weise funktioniert dieses System analog zum oben beschrieben Absatz (16), obwohl sämtliche Aufbauten unterhalb der vom Beschichter erzeugten Ebene liegen. Versuche zeigen, dass selbst extrem flussfähiges Partikelmaterial mit dem erfindungsgemäßen Aufbau keine anwachsenden "Hügel" erzeugen.

Eine ebenfalls besonders bevorzugte Ausführung der Erfindung ist die Räumung der Rinne (19) mit Bürsten anstelle des Schiebers (20). Diese ermöglichen im Verhältnis zu einem Schieber (20) eine höhere Toleranz des Systems gegen geometrische Ungenauigkeiten.

Die Behälter (19) werden so angeordnet, dass das Partikelmaterial jeweils in den vorderen (5) oder den hinteren (6) Auffangschacht geräumt wird. Dabei biegen eventuelle Hindernisse (2) auf dem Weg des Beschichters die Bürsten weg.

Ein günstiger Nebeneffekt der Erfindung ist ein exakt begrenztes Partikelmaterialbett, das den Reinigungsaufwand senkt und optisch ansprechend aussieht.

### Bezugszeichenliste

- 1: Beschichter
- 2: Beschichtungsebene
- 3: Modell
- 4: Partikelmaterial
- 5: Hinterer Schacht
- 6: Vorderer Schacht
- 7: Bauplattform
- 8: Partikelmaterialwalze im Arbeitsgang
- 9: Startposition
- 10: Partikelmaterialwalze bei der Leerfahrt
- 11: Endposition
- 12: Überschussmenge
- 13: Partikelmaterialsschicht
- 14: Wachsende Pulveraufhäufung
- 15: Druckkopf
- 16: Absatz
- 17: Dynamisches Pulverniveau
- 18: Schüttkegel am Absatz
- 19: Rinne
- 20: Schieber
- 21: 21 Bürste zur Abreinigung der Beschichterklinge
- 100: Beschichtungsrichtung
- 116: Baufeldbegrenzung

## Patentansprüche

1. Vorrichtung zum schichtweisen Aufbau von Modellen, wobei auf eine Bauplattform (7) ein Partikelmaterial (4) mittels eines Beschichters (1) und daran anschließend selektiv ein zweites Material jeweils schichtweise aufgetragen wird und diese beiden Auftragungsschritte wiederholt werden, bis ein gewünschtes Modell erhalten wird, wobei der Beschichter (1) quer zur Beschichtungsrichtung entstehende Überschussmengen (12) an Partikelmaterial (4) in mindestens einen Behälter befördert, **gekennzeichnet dadurch, dass** das Partikelmaterial (4) in dem Behälter mit dem Beschichter (1) bewegt wird.

2. Vorrichtung nach Anspruch 1, wobei mindestens ein Behälter entlang einer Seite der Bauplattform vornehmlich in Beschichtungsrichtung liegt.

3. Verfahren nach einem der vorhergehenden Ansprüche, wobei der Behälter vollständig unterhalb der Beschichtungsebene (2) des Partikelmaterials liegt.

4. Vorrichtung nach Anspruch 1 und 2, wobei der Behälter mit Abwurfschächten verbunden ist, die entlang der Vorder- und der Hinterkante Bauplattform vornehmlich quer zur Beschichtungsrichtung liegen, so dass Partikelmaterial (49 vom Behälter in die Schächte fließen kann.

5. Vorrichtung nach Anspruch 3, wobei am Beschichter (1) angebrachte Schieber (20) in den Behälter eingreifen und das Partikelmaterial (4) darin mit dem Beschichter (1) bewegen.

6. Vorrichtung nach Anspruch 4, **dadurch gekennzeichnet, dass** der Schieber (20) mit Bürsten versehen ist, die in den Behälter eingreifen.

## Claims

1. A device for the layered construction of models, wherein a layer of a particulate material (4) is coated on a construction platform (7) by means of a coater (1), followed by the selective coating of a layer of a second material, and said two coating steps are repeated until a desired model is obtained, said coater (1) conveying excessive amounts (12) of particulate material (4), formed transversely to the coating direction, into at least one container, **characterised in that** the particulate material (4) in the container is moved with the coater (1).

2. The device according to claim 1, wherein at least one container is located along one side of the construction platform, predominantly in the coating direction.

3. The method according to any one of the preceding claims, wherein the container is located completely below the coating plane (2) of the particulate material.

4. The device according to claims 1 and 2, wherein the container is connected with discharge chutes, which are located along the front and rear edges of the construction platform and extend predominantly transversely to the coating direction, so that particulate material (4) can flow from the container into the chutes.

5. The device according to claim 3, wherein pushers (20) mounted on the coater (1) engage with the container and move the particulate material (4) therein with the coater (1).

6. The device according to claim 4, **characterised in that** the pusher (20) is provided with brushes which engage with the container.

## Revendications

1. Dispositif pour la constitution de modèles par couches, dans on revête sur une plateforme de construction (7), au moyen d'un enducteur (1), une couche d'un matériau en particules (4) et ensuite, de manière sélective, une couche d'un deuxième matériau, répétant chacune des deux étapes de revêtement jusqu'à obtenir un modèle désiré, ledit enducteur (1) transportant des excédents (12) du matériau en particules (4), qui sont formés transversalement par rapport à la direction de revêtement, vers l'intérieur d'au moins un réservoir, **caractérisé en ce que** ledit matériau en particules (4) dans le réservoir est déplacé avec ledit enducteur (1).

2. Dispositif selon la revendication 1, dans lequel au moins un réservoir est disposé le long d'un côté de la plateforme de construction, surtout dans la direction de revêtement.

3. Procédé selon l'une quelconque des revendications précédentes, dans lequel le réservoir est disposé entièrement au-dessous du niveau de revêtement (2) du matériau en particules.

4. Dispositif selon les revendications 1 et 2, dans lequel le réservoir est relié à des sas de déversement disposés le long des bords avant et arrière de la plateforme de construction et s'étendant surtout transversalement par rapport à la direction de revêtement, de manière à permettre au matériau en particules (4) de s'écouler du réservoir dans les sas de déversement.

5. Dispositif selon la revendication 3, dans lequel des pousseurs (20) montés sur l'enducteur (1) viennent en prise avec le réservoir et déplacent le matériau en particules (4) dans celui-ci avec l'enducteur (1).

6. Dispositif selon la revendication 4, **caractérisé en ce que** le pousseur (20) comporte des brosses qui viennent en prise avec le réservoir.
